Europäisches Patentamt

European Patent Office

Office européen des brevets

(11) Publication number: **0 337 539**
**A2**

## EUROPEAN PATENT APPLICATION

(21) Application number: 89200836.8

(22) Date of filing: 03.04.89

(51) Int. Cl.4: **G09F 27/00 , H04M 11/02 , G06F 15/26**

(30) Priority: 11.04.88 IT 2015888

(43) Date of publication of application:
**18.10.89 Bulletin 89/42**

(84) Designated Contracting States:
**AT BE CH DE ES FR GB GR IT LI LU NL SE**

(71) Applicant: TELEMA s.r.l.
**Via S. Vittore, 7**
**I-20123 Milano(IT)**

(72) Inventor: **Terzi, Antonello**
**Via Vigoni, 8**
**I-20122 Milano(IT)**

(74) Representative: **Marchi, Massimo et al**
**c/o Marchi & Mittler s.r.l. Viale Lombardia 20**
**I-20131 Milano(IT)**

(54) **Telematic system of information and advertising messages for locations with a large attendance of people.**

(57) The system is based on a plurality of local distributors of informative and advertising messages (1), each of which is provided with a respective file of information and advertising messages (8), with means for the visual distribution of messages (5, 6), with means for the direct telephone connection (12, 13, 14) between suppliers and users of the messages and with an operating computer (7) for the selection and feeding of information and advertising messages from said file (8) to said means for visual distribution (5, 6) and the activation of said means for telephone connection (12, 14). The various local distributors (1) are connected to a communications network (2) whose only purpose is to complete the telephone connection and provide for the periodic updating of the files (8) of the above local distributors (1) under the control of a central computer (3).

Fig.2

# Telematic system of information and advertising messages for locations with a large attendance of people

This invention relates to a telematic system of information and advertising messages for locations with a large attendance of people.

A city, especially if of a large size, is reknownedly provided with a high number of locations attended by people who require information of various kinds.

In particular this is the case of railway stations, airports, highway toll booths, hotels, restaurants, venues of large events, headquarters of public bodies and so on.

The information required may be of widely different kinds, from railway and airline schedules to information on urban public services, from telephone numbers of taxis to those of travel agents, from a list of hotels to those of restaurants, from news of an economic and financial type to information on the outlets selling products of different kinds.

A service in a position of supplying the information required within the locations interested in the information itself is thus the best that can be offered to the public in general and in particular to those people in transit in the city.

On the other hand the extreme variability of the information required, in large part dependent on the locations requesting it, makes the idea hardly proposable of constituting a single centre for the distribution of information to be accessed, surely with difficulty and slowness, by the various locations using the service.

Object of the present invention is to accomplish a telematic system of information and advertising messages, which is to be extremely flexible and adaptable to individual locations, leading to a huge reduction in times of access and in operating costs and increasing on the other hand reliability and efficiency.

According to the invention such object has been attained with a telematic system characterized in that it comprises a plurality of local distributors of informative and advertising messages provided with respective files of information and messages to be selected, with means for the visual distribution of messages, with means for the direct telephone connection between suppliers and users of the messages and with an operating computer for the selection and feeding of information and messages from said files to said means for the visual distribution and the activation of said means for the telephone connection.

In this way, every location interested in the service has at its disposal an own message distributor, which operates autonomously and which can easily be personalized in relation to the above location. Every distributor can thus have on file the specific information and advertising messages which suit the locations in which it is installed and directly supply such information and advertising messages to the interested user, avoiding him long delays otherwise necessary for connecting to a central unit. In addition, this also allows, if desired, the direct telephone connection between the supplier and the user of any advertising message, allowing the completion of the service with a purchase order which repays the supplier the cost sustained for the production of the advertising message.

In addition to the various local distributors the system according to the invention provides in any case at least one communications network, which is only used to co-ordinate the telephone connection between the various distributors and to periodically update with a computer, by telephone or through the heavens, the files of the above distributors.

The characteristics of the present invention shall be made more evident by the following detailed description of one possible embodiment illustrated, as a non-limiting example, in the enclosed drawings, wherein:

Fig. 1 shows the overall constituting arrangement of a telematic system according to the invention;

Fig. 2 shows the constituting arrangement of a local message distributor for the telematic system of Fig. 1;

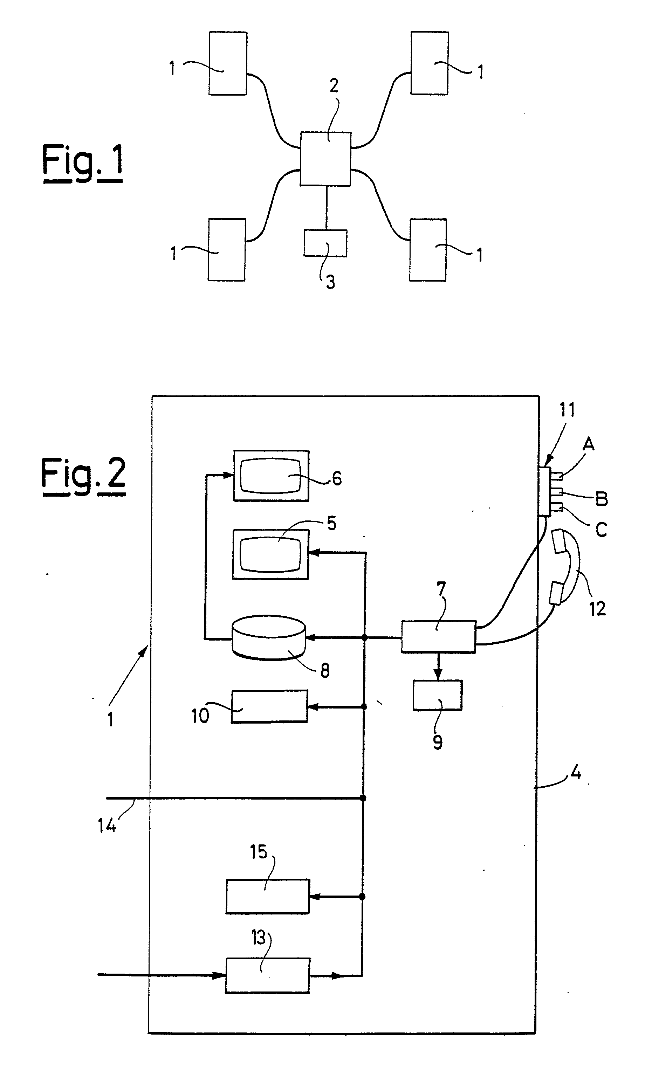

As shown in Fig. 1, a telematic system according to the invention is constituted by a plurality of local message distributors 1, equal to or different from one another, and a communications network 2 used for the telephone connection of the distributors 1 and, by means of computer 3, for the periodic updating of the data stored in the individual distributors. Such updating can occur through a telephone line or through the air.

As shown in Fig. 2, each local distributor 1 is formed by a cabinet or containment repository 4 provided with opaque walls, through which it is impossible to view the fixtures contained inside the cabinet but it at the same time possible to observe luminous images produced inside the cabinet itself.

Inside the cabinet 4 there are two video screens 5 and 6, the first for the display of informative and advertising texts and the second for the display of images related to the texts displayed on the screen 5.

The two video screens 5 and 6 are controlled by a personal computer 7, which obtains the images to display on the screen 6 from a file of information and advertising messages constituted by a videodisc 8. In addition the computer 7 controls a printer 9 and a counter device 10 which counts the number of times a given message is displayed.

The computer 7 is in turn controlled by a keyboard 11, which includes three keys A, B, C, of which the first two may be used to move in opposite directions the cursor for selecting the texts which is movable on the text screen 5 and the third may be used to order the appearance of the images corresponding to the texts selected on the image screen 6, the operation of the printer 9 and in general the execution of a series of subsequent operations.

Near the keyboard 11 there is also provided a microtelephone 12, which the computer 7 by means of the key C is in a position of putting in direct telephone connection with the supplier of the selected message, using for this purpose a normal telephone line 14 which connects the local distributor to the communications network 2. An impulse counter 15 allows for the counting of the number of telephone calls made to a given supplier.

Assuming that a message distributor such as that of Fig. 2 is, for example, installed in a hotel, the hotel's guests will be able to use in the following way the service which it places at their disposal.

The guest is first of all attracted by the informative and advertising texts in one or more languages which the computer 7 will preferably display in successive groups on the screen 5 and which the guest sees through the opaque wall of the cabinet 4.

During the display period of each group of texts the guest can operate the keys A and B in order to move up and down respectively the selection cursor associated with the text screen 5. Once the selection cursor has been locked on the interesting text (for example, the name of a restaurant), the guest makes the selection by means of the key C.

An image (or a series of images) then appears on the screen 6 able to adequately advertise the selected product or service.

At this point, if the guest is not satisfied, he may cancel the selection and make a new one or, if satisfied, he may lift the microtelephone 12 and by means of the key C request the conputer 7 to make the guest's direct telephone connection with the supplier of the advertised product or service (for example, with the restaurant's manager for booking a table).

While the supplier thus accomplishes a direct form of marketing whereby his products or services are presented directly to the possible client and, if all goes well, he obtain a financial return in the form of an order for the product or service, as well as by means of the counters 10 and 15 the statistical record of the executed contacts, the guest enjoys the convenience of having immediately available the information he desires and, if it meets with his satisfaction, to complete the operation with an order.

Since the operation is entirely executed in combination with the local distributor, the access time is clearly very much reduced, all to the advantage of the immediacy of the service offered.

The only task left to the network 2 is to execute the telephone connection of the distributors with the different suppliers.

In turn the computer 3 is only operated periodically, during the system's idle moments (for example, at night) to update the data stored in the local distributors. To this purpose it activates, by telephone or through the heavens, a receiver 13 contained in the distributors 1.

## Claims

1. Telematic system of information and advertising messages for locations with a large attendance of people, characterized in that it comprises a plurality of local distributors of informative and advertising messages (1) provided with respective files of selectable information and messages. (8), with means for the visual distribution of messages (5, 6), with means for the direct telephone connection (12, 14) between suppliers and users of the messages and with an operating computer (7) for the selection and feeding of information and messages from said files (8) to said means for the visual distribution (5, 6) and the activation of said means for the telephone connection (12, 14).

2. System according to claim 1, characterized in that said files (8) include a videodisc.

3. System according to claim 1, characterized in that said means for the visual distribution (5, 6) include a first video screen (5) for the display of informative and advertising texts and a second video screen (6) for the display of advertising images related to said texts.

4. System according to claim 1, characterized in that said local distributors (1) also include a keyboard (11) connected to said computer (7) for controlling the selection and feeding of said information and messages from said files (8) to said means for visual distribution (5, 6).

5. System according to claim 1, characterized in that said means for the telephone connection (12, 14) include a microtelephone (12) and a telephone line (14).

6. System according to claim 1, characterized in that it includes a communications network (2) for the telephone connection of said local distributors (1).

7. System according to claim 6, characterized in that it includes a central computer (3) associated with said communications network (2) for the periodic updating of said local distributors (1).

8. System according to claim 7, characterized in that each of said local distributors (1) includes receiving means (13) for updating signals produced by said central computer.

Fig.1

Fig.2